# EUROPEAN PATENT SPECIFICATION

(11) **EP 4 567 786 B1**
(45) Date of publication and mention of the grant of the patent: **28.10.2026**
(21) Application number: 25172789.7
(22) Date of filing: 07.12.2021
(51) Int. Cl.: G10K 15/02, H04R 3/08, G10K 9/18, G10K 11/02, G10K 11/04, H04R 1/28, H04R 1/34

(54) **VEHICLE WARNING SYSTEM**
FAHRZEUGWARNSYSTEM
SYSTÈME D'AVERTISSEMENT POUR VÉHICULE

(30) Priority: 14.12.2020 GB 202019729
(43) Date of publication of application: 11.06.2025
(60) Divisional application: 26190095.5 / 4 801 063; 26191076.4 / 4 797 727
(62) Document number(s) of the earlier application(s) in accordance with Art. 76 EPC: 21836046.9 / 4 260 313
(73) Proprietor: PSS Belgium NV, 9200 Dendermonde (BE)
(72) Inventor: HAELVOET, Tom, 9040 Gent (BE); VUINE, Fabian, 2800 Mechelen (BE); CORYNEN, David, 9500 Geraardsbergen (BE)
(74) Representative: Winger

(56) References cited:
- EP-A1- 3 113 173
- EP-A1- 3 686 880
- US-A1- 2017 134 847
- US-A1- 2017 359 639
- US-A1- 2019 009 716
- US-B2- 9 479 861
- KANDADAI SRIVATSAN: "Perceptual audio coding that scales to low bitrates", 1 May 2007 (2007-05-01), pages 1 - 194, XP055901094, Retrieved from the Internet <URL:https://www.researchgate.net/profile/Srivatsan-Kandadai-2/publication/33686878_Perceptual_audio_coding_that_scales_to_low_bitrates/links/551477130cf260a7cb2b2e89/Perceptual-audio-coding-that-scales-to-low-bitrates.pdf?origin=figuresDialog_download> [retrieved on 20220314]

## Description

### Field of the invention

The present invention is generally related to the field of external sound generating devices for a vehicle. More in particular, it is related to acoustic vehicle warning systems for outputting an acoustic warning signal.

### Background of the invention

Slow driving electric vehicles produce too little noise to be noticed by pedestrians. This clearly causes a safety issue, for example in the neighbourhood of schools, at pedestrian crossings or traffic lights. Legislation has been adapted to address this matter by making mandatory the generation of an artificial sound. An Acoustic Vehicle Alerting System (AVAS) is designed to emit vehicle warning sounds and alert pedestrians to the presence of electric drive vehicles. These include hybrid (HEVs), plug-in hybrid (PHEVs), and full battery electric vehicles (BEVs) travelling at low speeds, especially in the lowest speed range beyond which the noise generated by rolling tires can be easily heard.

A horn intended for producing a warning signal is installed in every vehicle. Horn signals have a typical sound that is automatically recognized by people as a horn. Worldwide people have grown accustomed to the sound of vehicle horns, in spite of tonal differences that may be observed between horn sound signals. Most horns use a similar principle of operation, based on a hammer knocking on a metal disk or vice versa to resonate in a specific way, hence its tonal character. The hammer or the disc itself is moved by means of electromagnetism in a fixed manner since the frequency of the hammer or disc movements is defined by an electromechanical interruption process. Direct current from the vehicle battery, e.g. 12V battery, is fed into a coil. The hammer moves towards the disc or vice versa. By moving forward the contact with the battery is interrupted and after hitting the disc or the hammer the contact is restored.

The monotonous stimulation of a resonating object brings forward a recognizable alarming tone, albeit with a tonal character defined by the frequency of excitation and by the characteristics of the resonating object. Typically a single horn produces a spectrum in which a low frequency component is clearly present (between 300Hz and 500Hz) combined with a louder high frequency component (around 2.5 kHz) amongst other less pronounced tones. From a legislative point of view the required amplitude levels for a horn signal are high and the bandwidth is narrow. The loudspeaker on the contrary has a relatively broad bandwidth, while the output amplitude levels are limited to avoid too loud output signals. Therefore the broadband AVAS loudspeakers cannot reach the sound pressure levels (SPLs) required for a horn unless they are overdesigned for the requirements imposed on an AVAS system.

In the art systems are known wherein the warning functionality of AVAS is combined with horn functionality. For example, US8217767 B2 discloses a vehicular horn device that can be used as a dynamic speaker so as to generate a false engine sound. The shortage of a low-pitched sound in a parametric speaker device is complemented with a false engine sound which the vehicular horn device generates. As the vehicle approaches a pedestrian, a sound tone of the false engine sound which the pedestrian hears changes, enabling the pedestrian to easily notice the approach or presence of the vehicle.

US10406976 B2 relates to a vehicle comprising a multi-purpose automotive sound device for alerting pedestrians. The sound device operates as a horn in a first mode in response to an external input (e.g. from the driver) and as a speaker or other sound generating device in a second mode in response to the vehicle moving in reverse or moving forward at a speed satisfying a given threshold.

FR2983025 presents a system to generate external sound for use in electric motor vehicles. A hybrid transducer controlled by a common interface that assures distribution of power between a piezo-electric transducer and a magnetic transducer according to a required function, e.g. alarm function and sound warning function.

In US2020/070719 an acoustic vehicle warning system for a motor vehicle is disclosed. The system comprises at least one loudspeaker and a control unit designed to output a continuous acoustic signal by means of the loudspeaker during driving operation of the motor vehicle. Further, the control unit can actuate the loudspeaker after an actuation unit has been actuated, the loudspeaker being designed to output an acoustic warning signal after receiving the actuation signal.

In EP3113173 A1 a sound generating system for an electric vehicle is disclosed. The system comprises a sound output unit which performs a warning sound function to warn a pedestrian about an approaching vehicle. Horn signals, however, are not discussed in this document.

In US2019/009716 A1 an external audio alert system for use in vehicles is presented. Vehicle states are controlled based on received messages and audio alerts are generated which are projected external to the vehicle based on the vehicle states. Multiple vehicle states can be defined, with each vehicle state associated with receipt of one or more types of messages in a particular sequence and/or within a particular timeframe. Different audio alerts may be assigned to different vehicle states.

Hence, there is a need for a system designed for use of a horn sound signal as well as for use of a warning signal to make road users aware of the presence or the approaching of the vehicle.

### Summary of the invention

It is an object of embodiments of the present invention to provide for an audible vehicle warning system that offers both warning functionality and horn functionality, while meeting all relevant legal requirements.

The above objective is accomplished by the solution according to the present invention as defined in claim 1.

The proposed solution indeed allows for operating the system for generating artificial sound to make e.g. pedestrians aware of the presence of a vehicle and for generating a horn signal. It is made sure both types of signal meet the respective legal requirements. Avas sounds are typically synthesized in real time making use of speed, acceleration, etc. info from the car. Each of the horn sound signals in the sound library has one 1/3 octave frequency band that serves as reference and contains at least a predetermined part of the total power of the sound signal. The loudspeaker is then so designed that its frequency response, when split up in 1/3 octave frequency bands, comprises a 1/3 octave frequency band corresponding to said reference frequency band wherein the average amplitude level over that band is at least a certain amount of dB higher than the average amplitude over a selected frequency range. The selected frequency range comprises at least the frequencies from 400 Hz to 2 kHz. The selected frequency range contains the reference band. In preferred embodiments the selected frequency range includes also the part of the frequency spectrum where a horn signal typically displays a peak, for example the range from 400 Hz to 4 kHz. The resulting peak in that 1/3 octave frequency band ensures the requirement is met that the horn signal produce a louder high frequency component.

In preferred embodiments the amplitude level of the 1/3 octave frequency band averaged response of the loudspeaker is 5 dB higher than the average amplitude level in the rated frequency range. This yields the advantage that a prominent peak is obtained in the response that meets the legally required high sensitivity. In other embodiments a gap of for example 6 dB or 9 dB or 12 dB is provided.

The predetermined part of the total power of the sound signal that is contained in the 1/3 octave frequency band taken as reference is advantageously one third of the total power. In other preferred embodiments the predetermined part is 40% or 50 % or 60%.

In preferred embodiments the loudspeaker of the loudspeaker system is mounted in a cavity.

Preferably the loudspeaker system has at least one acoustic resonance falling within the 1/3 octave frequency band having an amplitude level at least a given amount of dB above the average amplitude level in the selected frequency range.

In an example, said cavity may have a first opening in front of the loudspeaker's diaphragm.

Generally, the audible vehicle warning system comprises a horn mouth in front of the first opening.

Alternatively, the cavity may be provided with a second opening at the backside of the cavity.

Or in another example the cavity comprises both the first and the second opening. In advantageous exemplary embodiments the second opening may be in connection with at least one vent outlet oriented in a same direction as the first opening.

Advantageously, the loudspeaker system may comprise a single loudspeaker. This leads to a compact and efficient implementation.

In other exemplary embodiments the selected frequency range may comprise the range from 400 Hz to 4 kHz. In other preferred embodiments the selected frequency range goes from 300 Hz to 5 kHz.

In one embodiment the 1/3 octave frequency band comprises one spectral line containing that predetermined part of the power.

For purposes of summarizing the invention and the advantages achieved over the prior art, certain objects and advantages of the invention have been described herein above.

It is to be understood that the invention herein described is solely limited by the scope of the appended claims.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.
Fig.1 illustrates a power spectrum of a horn signal.
Fig.2 illustrates the power spectrum of Fig.1 split up in 1/3 octave frequency bands.
Fig.3 illustrates two examples of how the reference frequency band can be determined.
Fig.4 illustrates the parameters determining a resonance frequency in an air cavity.
Fig.5 illustrates an example of a loudspeaker system.
Fig.6 illustrates another example of a loudspeaker system.
Fig.7 illustrates further example of a loudspeaker system.
Fig.8 illustrates another further example of a loudspeaker system.
Fig.9 illustrates a 1/3 octave frequency band averaged response of the loudspeaker system.
Fig.10 illustrates an exemplary embodiment of a procedure to obtain a sound signal of the sound library.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention relates to an audible vehicle warning system that is also arranged for generating a horn sound. The horn sound signal is designed to be recognizable as such when output by a loudspeaker of the warning system. As already mentioned above, this requires that the horn signal meet the specifications imposed by legislation. The horn needs to be homologated both at car level and at device level. At device level the power sum of A-weighted 2kHz, 2.5kHz and 3.15kHz third octave frequency bands of the generated horn signal should be at least 105 dB sound pressure level (SPL), measured in free field conditions and with a microphone on-axis at 2m from the device under test. As commonly known in the art, the upper band edge frequency of a 1/3 octave frequency band equals the lower band edge frequency times 2^{1/3}. At vehicle level the A-weighted sound pressure level should be at least 87 dB(A), measured in half space free field outside and on-axis at a distance of 7m from the vehicle, with the microphone at least 0.5 m above the ground. Further, also the design of an audible vehicle warning system is subject to a set of legal requirements.

Loudspeakers in a free-field or an half-space free-field condition can be characterized acoustically by the transfer response between an electrical input voltage and the sound pressure output generated at a reference point at a stated distance on a reference axis (usually on-axis) in the far field. Loudspeaker sensitivity is defined as the sound pressure level in a given frequency band generated by a voltage corresponding to an input power of 1 W at rated impedance Zn for a distance of 1m.

Legal requirements define minimum sound pressure levels for both the horn signal and the loudspeaker of the vehicle warning system but do not specify how they should sound. Today, typical vehicle warning system loudspeakers have a sensitivity of 80 to 85dB/W/m over a frequency range of 315Hz to 5kHz to meet global AVAS requirements and a power handling capacity between 10W and 20W. This, however, is insufficient for implementing horn functionality, if one assumes the horn signal needs a SPL response with a minimum sensitivity of 100 to 105dB/W/m within the octave band of 2.5kHz (i.e. in the range of 1.8kHz-3.5kHz) in order to meet the legal requirements.

A loudspeaker in an audible vehicle warning system of this invention is a broadband loudspeaker, i.e. a loudspeaker which is arranged for outputting sound signals at least in a rated frequency range from 400 Hz to 2 kHz, preferably in a range from 300 Hz to 5 kHz. A loudspeaker system with a peak in its SPL response corresponding to a peak in the horn power spectrum, or vice versa, may allow for a loudspeaker with a low average sensitivity while capable of meeting the legislation concerning the horn sound signal.

This can be achieved for example by relying on the use of resonance effects. Resonances are inherently present in any broadband loudspeaker, but are certainly not designed towards the reproduction of a specific and fixed sound. Moreover, they are generally regarded as unwanted and, if present, one likes to smoothen a peaky SPL response by means of damping. In the present invention, however, peaks in the frequency response are created on purpose in order to ensure a faithful reproduction of the horn sound signal. More details are provided later in this description.

The audible vehicle warning system may comprise as main components a sound library of one or more sound signals intended to be used as a horn signal and a broadband loudspeaker system comprising a loudspeaker for outputting a sound signal selected from the library.

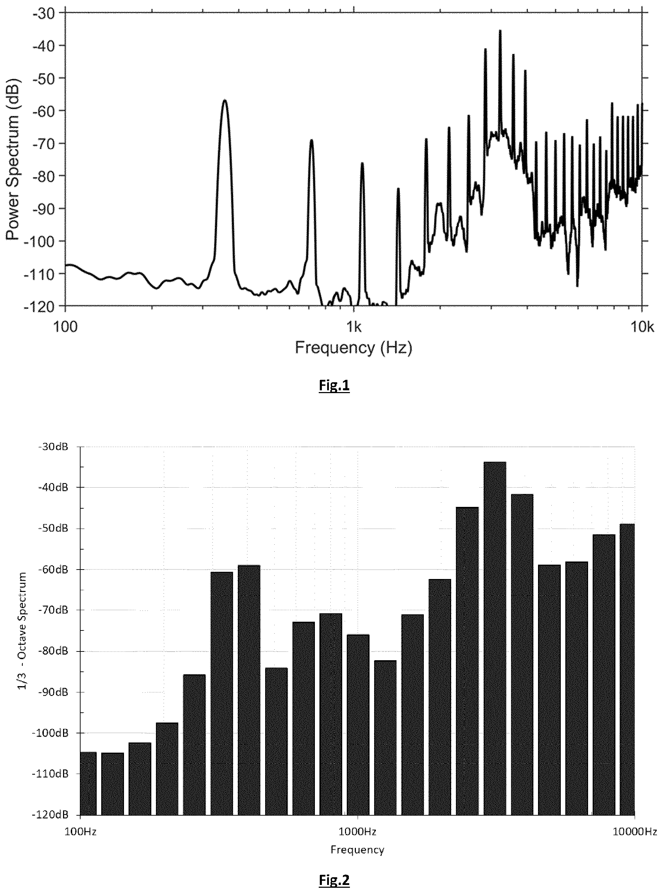

A horn has a typical frequency spectrum. An illustration is provided in Fig.1, showing a power spectrum of a horn signal. The spectrum displays a fundamental tone at a frequency corresponding to the rate at which the hammer of the vehicle horn beats against the tone disk. This frequency usually lies in the octave between 300 Hz and 600 Hz. Further the spectrum shows several overtones, some of which are higher in amplitude than the fundamental tone. In the example of Fig.1 the strongest overtone is around 3150 Hz, which is in the most sensitive region of the human auditory system. This overtone also falls within the 2.5 kHz octave band which is the window of the homologation procedure for vehicle horns, as already mentioned.

Any sound signal of the sound library comprised in the system of the present invention is characterized by a 1/3 octave power spectrum. A 1/3 octave frequency band of the horn sound signal containing at least a predetermined amount of the total power is taken as a reference frequency band for the signal in question. This 1/3 octave frequency band representative of the sound signal under consideration and taken as reference contains for example half of the total power, i.e. 50 % of the power, or one third of the power or 60% or 40% or of the power.

An illustration is provided in Fig.2, where the power spectrum of Fig.1 is depicted split up in third octave frequency bands of the horn signal. The centre frequencies of the various bands can be chosen for example, but not necessarily, in line with the ANSI S1.11 standard. The relative contribution of each 1/3 octave frequency band of the various bands to the power spectrum can then be determined. In this example it is found that the 3.15 kHz third octave frequency band contains more than 70% of the total power of the signal. In this case it is clear the 3.15 kHz third octave frequency band is to be taken as reference frequency band for the horn sound signal depicted in Fig.1. This reference frequency band plays an important role when designing the loudspeaker frequency response, as will be shown later in this description.

In case the predetermined part of the power in the horn signal is set higher than 50 %, there is obviously at most only one third octave frequency band that can qualify as reference frequency band. If said predetermined part is set at 50% or less, there may be more than one frequency band meeting this criterion. In that case any of those bands can be considered for use as reference frequency band.

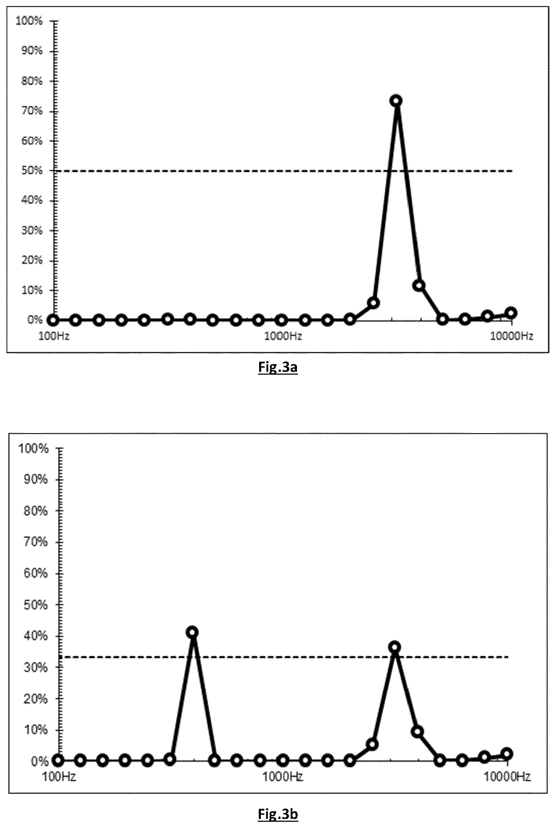

This is illustrated by means of some examples in Fig.3. In Fig.3a the predetermined portion of the power in the reference frequency band is taken to be half of the total power. Obviously there is only one 1/3 octave frequency band that meets the criterion and thus there is only one candidate to be used as reference. In the example shown in Fig.3b, on the contrary, the predetermined part is set at one third of the total power and two 1/3 octave frequency bands are found that at least contain one third of the total power. As mentioned above, in principle any of the two can be selected to serve as reference frequency band. In practice, in this particular example, the higher frequency band around 3.15 kHz is chosen in order to meet the legal requirements concerning the horn signal.

Said reference frequency band is determined when creating the sound library. Information related to the 1/3 octave frequency band that serves as reference frequency band is stored in the sound library, along with the sound signal itself in the sound library. The audible vehicle warning system comprises processing means to determine the 1/3 octave frequency band that is to be used as reference frequency band on the fly. It may then be sufficient to store only the sound signal itself.

The reference frequency band of the horn sound signal is used to determine the frequency response of the loudspeaker system. The frequency response of the loudspeaker is so designed that, when representing the frequency response using 1/3 octave frequency bands and determining for each of those bands an average value of the response, there is a 1/3 octave frequency band frequency band corresponding to the reference frequency band that has an amplitude level which is at least a certain amount, e.g. 3 dB or 5 dB or 6 dB or 12 dB above the average amplitude level in the rated frequency range, i.e. in the frequency range from 400 Hz to 2kHz, preferably from 300 Hz to 5 kHz. The inventors have found that a 5 dB peak in the amplitude level yields satisfactory results in practice.

The 1/3 octave frequency band corresponding to the reference frequency band may in some embodiments have the same centre frequency as the reference frequency band. In other embodiments its centre frequency may have shifted with respect to that of the reference frequency band.

Apart from the high sensitivity in the frequency band corresponding to the reference frequency band, which is needed to meet the horn homologation requirements, the loudspeaker is preferably so designed that it also has a good sensitivity around the fundamental tone of the sound signal from the sound library, for example in the third octave frequency band comprising that fundamental frequency. In other frequency ranges (and thus in 1/3 octave frequency bands corresponding thereto) a lower sensitivity is acceptable, as only the requirements for acoustic vehicle alerting need to be met, which are less strict than for a horn. For example, in the frequency range from 300 Hz to 2kHz outside the 1/3 octave frequency band corresponding to the reference frequency band and possibly the frequency band corresponding to the fundamental tone, or in the corresponding 1/3 octave frequency bands, a 85dB/W sensitivity may be sufficient for the loudspeaker frequency response.

A loudspeaker has a membrane, also often called diaphragm, having a front surface facing in a forward direction for producing sound to be radiated outwardly from the loudspeaker in the forward direction and a back surface facing in a backward direction. Both the forward and backward directions extend along the longitudinal axis of the loudspeaker. The diaphragm is suspended from a frame of the loudspeaker by a rim which extends continuously around the outer edge of the membrane.

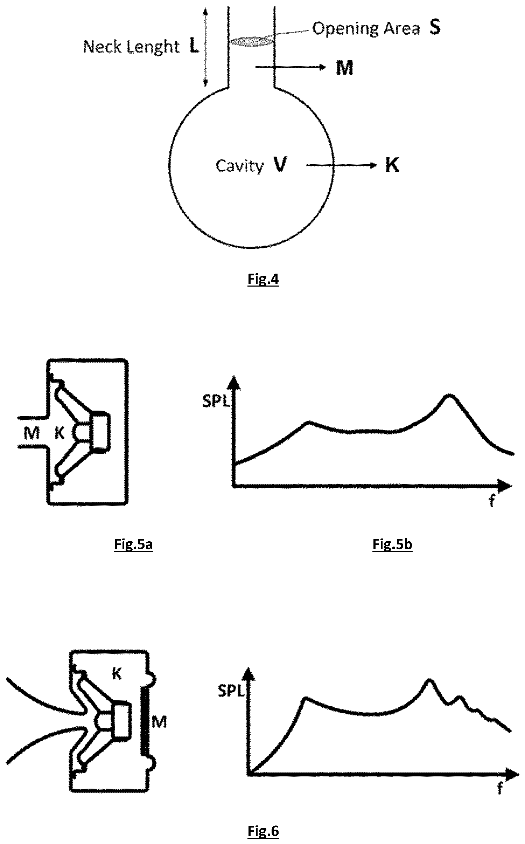

It was already mentioned above that the envisaged frequency responses can be obtained for example by exploiting acoustic and/or mechanic resonance effects. The basic principle used is based on the well-known mass-spring interaction. Resonance occurs when the frequency of the applied oscillating force is equal or close to a natural frequency of the system. The system then oscillates at a higher amplitude than when the same force is applied at other, non-resonant frequencies. The natural frequency of a mass-spring system is defined by following relation : ${F}_{0} = \frac{1}{2 π} \sqrt{\frac{K}{M}}$ wherein F₀ denotes the natural frequency [Hz], K the spring stiffness [N/m] and M the mass [kg]. See Fig.4. K can be a mechanical spring or an enclosed volume of air. M can be a mechanical mass or a mass of air acting on an enclosed volume of air (Helmholtz resonator). $M = {ρ}_{0} ⋅ S ⋅ L K = \frac{{ρ}_{0} ⋅ {c}^{2} ⋅ {S}^{2}}{V}$ which leads to ${F}_{0} = \frac{c}{2 π} \sqrt{\frac{S}{V ⋅ L}}$ where (see also Fig.4) V denotes an enclosed volume of air [m³], S the surface area of opening [m²], L the length of opening [m], ρ₀ the density of air [kg/m³]. Other acoustic principles can be used to increase the SPL at a particular frequency, e.g. making use of standing waves in tubes, impedance matching between loudspeaker and air by using a horn or waveguide,... Some possible ways to implement the loudspeaker system are now presented.

An example of a loudspeaker system is illustrated in Fig.5a. The loudspeaker depicted in Fig.5a comprises a front resonator implemented as a cavity with an opening in front of the diaphragm. The opening can act as a mass and the air volume between the cavity and the diaphragm as a spring. Together they can be tuned as needed to meet the SPL requirements in the appropriate frequency band for the horn sound signal being considered. The loudspeaker box volume acts as a spring for the moving mass of the loudspeaker, which is formed by the diaphragm, coil and a part of suspension. Here a high quality-factor (low losses) of the resonant system enables an increased SPL at resonance frequency.

In Fig.5b the resulting frequency response is shown. The highest peak results from the tuned SPL peak of the front resonator. A less pronounced SPL peak is obtained from the tuned resonance frequency of the loudspeaker box. This SPL peak can be increased by lowering the damping (by increasing the quality factor Q).

In some exemplary embodiments a phase plug can be used to optimize the tuning of the peak frequencies. In further embodiments also other acoustic attributes (tube, horn, etc...) can be used to maximize the SPL in the frequency band of interest.

An exemplary loudspeaker embodiment is illustrated in Fig.6. In this embodiment a pressure chamber is provided between the horn mouth and the loudspeaker diaphragm. In this way the impedance of the horn outlet can be matched with the impedance of the air and thus a better efficiency can be obtained in a selected frequency range, dependent on the size and shape of the horn design. A passive diaphragm is provided at the backside of the loudspeaker box. A possible resulting frequency response shape is also depicted in Fig.6.

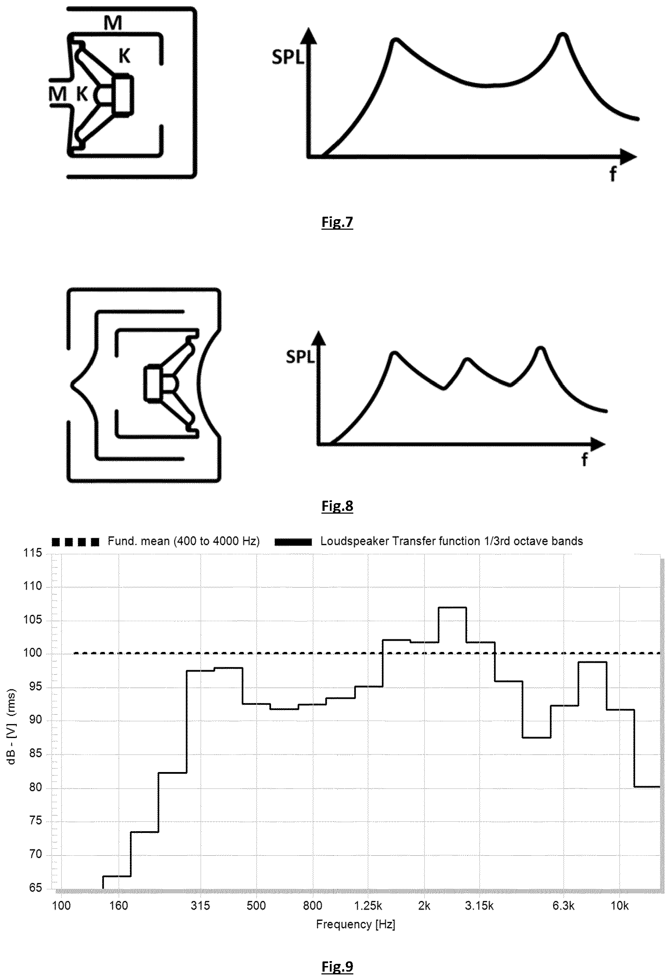

Yet another illustration is provided in Fig.7. In this embodiment the loudspeaker comprises a bandpass enclosure with two vent outlets facing forward. The small volume and small mass of air on the front of the loudspeaker result in a higher tuning frequency as compared to the lower tuning frequency due to the larger volume of air and higher mass of air acting on it; this can be seen in the resulting SPL frequency response, which is also shown in Fig.7.

Also more complex implementations can be realised. Fig.8 depicts a loudspeaker with a sixth order bandpass enclosure. A robust implementation is obtained in this embodiment thanks to the single outlet and the loudspeaker unit well embedded inside the loudspeaker box. With this setup a frequency response can be obtained with more peaks than in the previously discussed embodiments.

For the skilled in the art it will be apparent that any combination of these known techniques can be utilized to obtain a desired SPL level at a selected frequency.

A resulting 1/3 octave frequency band averaged response of the loudspeaker system is illustrated in Fig.9.

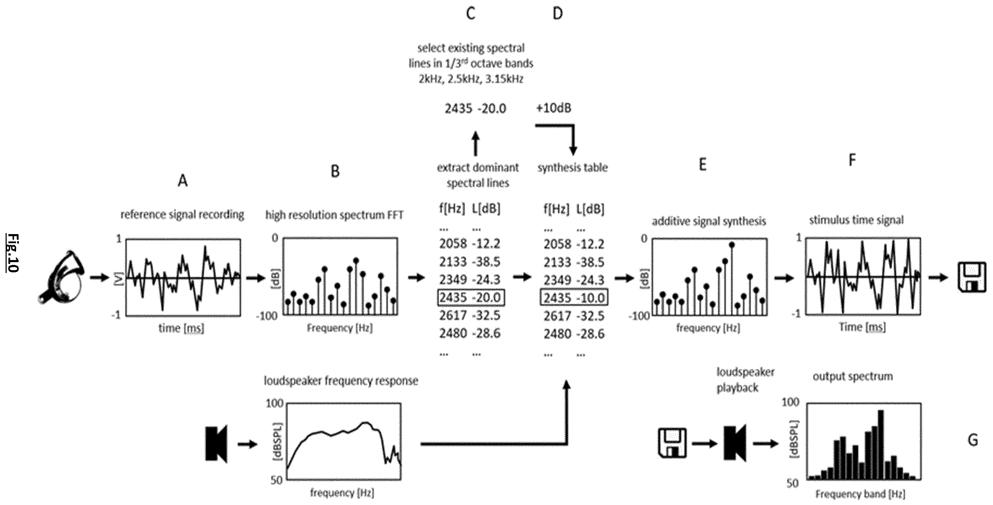

Fig.10 provides an overview of a possible process to obtain a sound signal for the sound library. The procedure illustrated in Fig.10 uses a recording of a time signal of an existing horn in operation measured at evaluation distance as prescribed. The recorded signal is taken as input signal and from this input signal is derived a signal one would like to use as horn signal and store in the sound library. The latter signal is illustrated in step A. This is the time domain signal one wants to be reproduced for the listener. In step B the signal is converted into a high resolution spectrum Fast Fourier Transform. It can be seen from the spectrum that a lot of harmonics are present in the recorded horn signal. Dominant spectral lines are extracted by finding local maxima in the spectrum. This results in step C in a table with dominant spectral lines and their respective amplitudes. From this table one or more spectral lines are extracted that lie in 1/3^{rd} octave frequency bands that are relevant for the device homologation, e.g. bands in the neighbourhood of 2 kHz, 2.5 kHz and 3.15 kHz. The extracted spectral lines may already have a relatively high amplitude value compared to the average, but that is no requirement. In the example shown in Fig.10 only one spectral line is selected, namely at 2.4356 kHz. The value(s) of the selected frequency or frequencies is/are increased in a synthesis table, shown as step D. The amount with which the value is increased may depend on various factors. The resulting peak has to be high enough to meet the requirement that the average amplitude level is exceeded by a certain number of dB. Further also the design of the loudspeaker has to be taken into account. It is an advantage to use only one or a few selected spectral lines in that so the tonal characteristics of the signal is not much affected. Other values in the synthesis table can be modified based on the capability and frequency response curve of the loudspeaker intended for the signal playback. For example, the signal can be band limited to exclude a part of the spectrum that does not result in significant loudspeaker output. From the synthesis table a synthesized stimulus signal is generated by using the frequencies and amplitudes of the synthesis table, whereby the phase for each individual spectral component is randomized. The resulting additive signal synthesis spectrum is illustrated in step E. Note that the lowest frequencies (below ± 300 Hz in this example) are absent. The synthesized signal has at least one dominant signal line in the relevant frequency band for device homologation. For the rest the tonal characteristics of the input signal from which was started, are not substantially altered. The corresponding time domain signal is shown in part F of Fig.10. The synthesized signal (represented either in the time domain or in the frequency domain) resulting from the synthesis table is stored in a sound library. As illustrated in the last part of Fig.10 the stored sound signal can be used for later loudspeaker playback. In part G of Fig.10 a graph of the 1/3 octave frequency band spectrum of the output signal is shown. The output spectrum closely resembles the reference signal. The peak in the relevant frequency band makes it loud enough to pass the device homologation.

Alternative ways to create a sound signal for the sound library are available. For example, a manufacturer may artificially produce a sound signal wherein the power is spread over the various frequency bands in such a way that a peak is present at a convenient position in the spectrum.

In embodiments of the invention the sound library comprises one or more sound signals that can be used as horn signal. For each sound signal of the library a suitable loudspeaker frequency response. One sound signal may differ from another sound signal stored in the sound library for example because one starts from another reference signal, or because another selection of spectral lines is used to build a synthesis table as in Fig.10.

Obviously, the loudspeaker system may be so designed (for example according to one of the embodiments illustrated in Figs.5 to 8) that it allows producing all sound signals stored in the sound library in such a way that they are recognizable as a horn signal.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention as defined in the appended claims is not limited to the disclosed embodiments,

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. Method for creating a sound signal to be added to a sound library for an audible vehicle warning system, said sound library comprising one or more sound signals intended as a horn signal when output by a loudspeaker of said audible vehicle warning system, the method comprising :
- receiving as input a recording of a time domain signal of an existing horn in operation measured at evaluation distance for homologation as horn for deriving a candidate sound signal to use as a horn signal, the method comprising:
- determining a frequency domain representation of said time domain signal,
- analysing said frequency domain representation of said candidate sound signal and selecting one or more dominant spectral components with their respective amplitudes from said frequency domain representation, **characterised in that** the method further comprises:
- checking if, when said candidate sound signal is split up into a plurality of 1/3 octave frequency bands, a 1/3 octave frequency band of said plurality containing said one or more dominant spectral components and relevant for said homologation contains at least a predetermined part of the total power of said plurality of 1/3 octave frequency bands of said candidate sound signal, and, if that condition is not met, adapting the amplitude of said selected one or more dominant spectral components to ensure said 1/3 octave frequency band contains at least said predetermined part of the power,
- generating a sound signal containing said selected one or more dominant spectral components and corresponding amplitude,
- storing a version of said sound signal in said sound library.

2. Method for creating a sound signal as in claim 1, wherein said step of generating said sound signal comprises generating a synthesized stimulus signal with a randomized phase for each individual spectral component.

3. Method for creating a sound signal as in any of the previous claims, wherein said 1/3 octave frequency band comprises one spectral line containing said predetermined part of the power of said candidate sound signal.

4. Method for creating a sound signal as in any of the previous claims, wherein said predetermined part is at least one third of the total power of said candidate sound signal.

5. Method as in any of the previous claims, comprising a step of applying said stored version of said sound signal to said loudspeaker.

6. Method as in claim 5, wherein said loudspeaker has at least one acoustic resonance falling within said 1/3 octave frequency band.

## Patentansprüche

1. Verfahren zum Erzeugen eines Tonsignals, das einer Tonbibliothek für ein akustisches Fahrzeugwarnsystem hinzugefügt werden soll, wobei die Tonbibliothek ein oder mehrere Tonsignale umfasst, die als ein Hupensignal vorgesehen sind, wenn sie von einem Lautsprecher des akustischen Fahrzeugwarnsystems ausgegeben werden, wobei das Verfahren Folgendes umfasst:
- Empfangen einer Aufzeichnung eines Zeitbereichssignals einer vorhandenen, in Betrieb befindlichen Hupe als Eingang, gemessen in einem Bewertungsabstand zur Homologation als Hupe, um ein Kandidaten-Tonsignal zur Verwendung als ein Hupsignal abzuleiten,
wobei das Verfahren Folgendes umfasst:
- Bestimmen einer Frequenzbereichsdarstellung des Zeitbereichssignals,
- Analysieren der Frequenzbereichsdarstellung des Kandidaten-Tonsignals und Auswählen einer oder mehrerer dominanter Spektralkomponenten mit ihren jeweiligen Amplituden aus der Frequenzbereichsdarstellung,
**dadurch gekennzeichnet, dass** das Verfahren weiter Folgendes umfasst:
- Überprüfen, ob, wenn das Kandidaten-Tonsignal in eine Vielzahl von 1/3-Oktavfrequenzbändern aufgeteilt wird, ein 1/3-Oktavfrequenzband der Vielzahl, die die eine oder mehreren dominanten Spektralkomponenten enthält und für die Homologation relevant ist, mindestens einen vorbestimmten Teil der Gesamtleistung der Vielzahl von 1/3-Oktavfrequenzbändern des Kandidaten-Tonsignals enthält, und, falls diese Bedingung nicht erfüllt ist, Anpassen der Amplitude der ausgewählten einen oder mehreren dominanten Spektralkomponenten, um sicherzustellen, dass das 1/3-Oktavfrequenzband mindestens den vorbestimmten Teil der Leistung enthält,
- Erzeugen eines Tonsignals, das die ausgewählte(n) eine oder mehreren Spektralkomponenten und die entsprechende Amplitude enthält,
- Speichern einer Version des Tonsignals in der Tonbibliothek.

2. Verfahren zum Erzeugen eines Tonsignals nach Anspruch 1, wobei der Schritt vom Erzeugen des Tonsignals Erzeugen eines synthetischen Stimulussignals mit einer randomisierten Phase für jede einzelne Spektralkomponente umfasst.

3. Verfahren zum Erzeugen eines Tonsignals nach einem der vorstehenden Ansprüche, wobei das 1/3-Oktavfrequenzband eine Spektrallinie umfasst, die den vorbestimmten Teil der Leistung des Kandidaten-Tonsignals enthält.

4. Verfahren zum Erzeugen eines Tonsignals nach einem der vorstehenden Ansprüche, wobei der vorbestimmte Teil mindestens ein Drittel der Gesamtleistung des Kandidaten-Tonsignals ist.

5. Verfahren nach einem der vorstehenden Ansprüche, umfassend einen Schritt vom Anlegen der gespeicherten Version des Tonsignals an den Lautsprecher.

6. Verfahren nach Anspruch 5, wobei der Lautsprecher mindestens eine akustische Resonanz aufweist, die in das 1/3-Oktavfrequenzband fällt.

## Revendications

1. Procédé de création d'un signal sonore à ajouter à une bibliothèque sonore pour un système d'avertissement sonore de véhicule, ladite bibliothèque sonore comprenant un ou plusieurs signaux sonores destinés à être utilisés comme signal de klaxon lorsqu'ils sont émis par un haut-parleur dudit système d'avertissement sonore de véhicule, le procédé comprenant :
- la réception en entrée d'un enregistrement d'un signal temporel d'un klaxon existant en fonctionnement mesuré à une distance d'évaluation pour homologation en tant que klaxon afin de dériver un signal sonore candidat à utiliser comme signal de klaxon,
**caractérisé en ce que** le procédé comprend en outre
- la détermination d'une représentation dans le domaine fréquentiel dudit signal temporel,
- l'analyse de ladite représentation dans le domaine fréquentiel dudit signal sonore candidat et la sélection d'un ou plusieurs composants spectraux dominants avec leurs amplitudes respectives à partir de ladite représentation dans le domaine fréquentiel,
- la vérification si, lorsque ledit signal sonore candidat est divisé en une pluralité de bandes de fréquence d'un tiers d'octave, une bande de fréquence d'un tiers d'octave de ladite pluralité contenant ledit ou lesdits composants spectraux dominants et pertinente pour ladite homologation contient au moins une partie prédéterminée de la puissance totale de ladite pluralité de bandes de fréquence d'un tiers d'octave dudit signal sonore candidat, et, si cette condition n'est pas remplie, l'adaptation de l'amplitude dudit ou desdits composants spectraux dominants sélectionnés pour garantir que ladite bande de fréquence d'un tiers d'octave contient au moins ladite partie prédéterminée de la puissance,
- la génération d'un signal sonore contenant ledit ou lesdits composants spectraux dominants sélectionnés et l'amplitude correspondante,
- le stockage d'une version dudit signal sonore dans ladite bibliothèque sonore.

2. Procédé de création d'un signal sonore selon la revendication 1, dans lequel ladite étape de génération dudit signal sonore comprend la génération d'un signal de stimulus synthétisé avec une phase aléatoire pour chaque composant spectral individuel.

3. Procédé de création d'un signal sonore selon l'une quelconque des revendications précédentes, dans lequel ladite bande de fréquence d'un tiers d'octave comprend une ligne spectrale contenant ladite partie prédéterminée de la puissance dudit signal sonore candidat.

4. Procédé de création d'un signal sonore selon l'une quelconque des revendications précédentes, dans lequel ladite partie prédéterminée est d'au moins un tiers de la puissance totale dudit signal sonore candidat.

5. Procédé selon l'une quelconque des revendications précédentes, comprenant une étape d'application de ladite version stockée dudit signal sonore audit haut-parleur.

6. Procédé selon la revendication 5, dans lequel ledit haut-parleur présente au moins une résonance acoustique tombant dans ladite bande de fréquence d'un tiers d'octave.
